# FASCICULE DE BREVET EUROPEEN

(11) **EP 0 706 938 B1**
(45) Date de publication et mention de la délivrance du brevet: **30.12.1998**
(21) Numéro de dépôt: 95402254.7
(22) Date de dépôt: 09.10.1995
(51) Int. Cl.: B64C 27/605, B64C 27/72

(54) **Dispositif de commande de pas des pales d'un rotor de giravion**
Vorrichtung zur Verstellsteuerung der Blätter eines Hubschrauberrotors
Device to control the pitch of the blades of an helicopter rotor

(30) Priorité: 13.10.1994 FR 9412229
(43) Date de publication de la demande: 17.04.1996
(73) Titulaire: EUROCOPTER, F-13725 Marignane Cédex (FR)
(72) Inventeur: Daldosso, Louis Joseph, F-13290 Les Milles (FR)
(74) Mandataire: Bérogin, Francis

(56) Documents cités:
- FR-A- 1 505 127
- GB-A- 916 894

## Description

L'invention concerne un dispositif de commande de pas des pales d'un rotor de giravion, du type à plateaux cycliques, sur lequel chaque pale est, d'une part, entrainée en rotation autour d'un axe de rotation d'un mât rotor par l'intermédiaire d'un moyeu, solidaire du mât rotor, et, d'autre part, solidaire en rotation, autour d'un axe longitudinal de changement de pas de la pale, d'un levier de pas commandé par une bielle de pas reliée à un plateau tournant avec le mât rotor et appartenant à un mécanisme à plateaux cycliques, dans lequel le plateau tournant est monté en rotation sur un plateau non tournant pouvant coulisser axialement le long du mât rotor et s'incliner dans toute direction par rapport au mât rotor, sous l'action d'actionneurs de commandes de vol.

Le dispositif de commande de pas de l'invention est en particulier destiné à équiper un rotor principal d'un hélicoptère à très grande vitesse, notamment en translation vers l'avant.

Indépendamment des couplages pas-battement et pas-trainée, les dispositifs de commande du pas des pales d'un rotor d'hélicoptère comprenant un mécanisme classique à plateaux cycliques permettent de produire, en repère tournant avec le mât rotor et le moyeu, d'une part, un pas collectif simultanément donné à toutes les pales, et, d'autre part, un pas cyclique, s'ajoutant au pas collectif et appliqué à chaque pale à la fréquence de rotation.

On sait que l'équilibre du rotor, pour assurer l'équilibre et la traction d'un hélicoptère en vol de translation vers l'avant, est obtenu par le développement de portances voisines, voire égales, sur les côtés opposés du disque rotor, de part et d'autre de l'axe longitudinal de l'hélicoptère, et par l'inclinaison du disque rotor vers l'avant de l'hélicoptère. A cet effet, en raison de la dissymétrie des vitesses entre la ou les pales avançantes et la ou les pales reculantes, par rapport à la direction de déplacement de l'hélicoptère, il est connu de donner aux pales un pas cyclique qui diminue le pas ou l'incidence de la ou des pales avançantes alors que celui ou celle de la ou des pales reculantes est augmenté(e).

Mais le respect de ces contraintes d'équilibre et de propulsion est limité par l'apparition de phénomènes de décrochage de la ou des pales reculantes ou arrière, dont le pas est trop important, et de chocs transsoniques sur la ou les pales avançantes ou avant.

Le fonctionnement d'un rotor à très grande vitesse est ainsi limité par les phénomènes de décrochage et de divergence de trainée. Selon des études de la demanderesse, environ 15 à 20 % de la puissance développée nécessaire à un vol d'hélicoptère à très grande vitesse sont consommés par les deux phénomènes aérodynamiques précités.

A titre d'exemple, pour un hélicoptère d'une masse de l'ordre de 4250 kg à une vitesse de 360 km/h, les études précitées de la demanderesse montrent que la puissance consommée pour ce vol à très grande vitesse se répartit en:
- 60 % de puissance nécessaire à vaincre la traînée du fuselage,
- 5 % de puissance induite nécessaire à la sustentation, et
- 35 % de trainée des profils des pales, dont les limites de fonctionnement essentielles sont, d'une part, le décrochage des profils de pale aux incidences élevées, occasionnant une augmentation importante de trainée et une perte de portance, et, d'autre part, le comportement transsonique des profils de pale aux nombres de Mach élevés, ce qui occasionne une divergence de traînée à portance nulle.

Un hélicoptère en translation à très grande vitesse est particulièrement confronté à ces limites, en raison de la dissymétrie importante des vitesses entre sa ou ses pales avançantes, à un nombre de Mach compris entre 0,5 et 0,9, et sa ou ses pales reculantes, à nombre de Mach compris entre 0 et 0,3.

Les études précitées de la demanderesse montrent que le décrochage des profils et leur comportement transsonique correspondent à 50 % environ de la trainée de profils, intervenant elle-même pour les 35 % de la puissance totale consommée. Il en résulte que, sur cette part de la puissance, des gains potentiels envisageables en remédiant aux problèmes de décrochage des profils et de chocs transsoniques s'élèvent à environ 17 % de cette puissance totale consommée.

L'invention a pour but principal de modifier la commande de pas assurée de manière classique par un mécanisme à plateaux cyliques, de manière à introduire une commande de pas bicyclique passive, dont la phase et l'amplitude sont pilotées par le dispositif de l'invention, afin d'adapter cette commande de pas bicyclique à la configuration du vol, telle qu'elle est reflétée par exemple par des consignes de position des commandes de vol et/ou par des consignes de valeur de certains paramètres de vol.

A cet effet, le dispositif de commande de pas des pales d'un rotor selon l'invention, du type présenté ci-dessus, se caractérise en ce qu'il comprend :
- un plateau auxiliaire, solidaire en rotation du plateau tournant, et monté rotatif avec une excentration définie sur le plateau non-tournant, et
- pour chaque pale, une liaison articulée, qui comprend au moins un bras, par lequel elle est reliée au plateau tournant par une première articulation, et qui est montée en série avec la bielle de pas correspondante en étant reliée à cette bielle de pas par une seconde articulation, distincte de la première articulation ainsi que d'une troisième articulation par laquelle la liaison articulée est reliée à un levier de commande, articulé par ailleurs sur le plateau auxiliaire tournant et excentré, de sorte que la rotation de ce dernier induise par chaque levier de commande des mouvements angulaires de chaque bras de la liaison articulée correspondante, qui déplace la bielle de pas de façon à commander le pas de la pale correspondante.

En particulier, la phase et l'amplitude de la composante bicyclique du pas donné aux pales peuvent ainsi être adaptées à la configuration du vol.

Selon une première architecture de réalisation, chaque liaison articulée peut comprendre un unique bras, relié par une partie d'extrémité à une extrémité de la bielle de pas correspondante par la seconde articulation, et par sa partie d'extrémité opposée à l'une des première et troisième articulations de la liaison articulée respectivement sur le plateau tournant et sur une partie d'extrémité du levier de commande correspondant, lequel est articulé par sa partie d'extrémité opposée sur le plateau auxiliaire, tandis que le bras est articulé, entre ses parties d'extrémité, à l'autre des première et troisième articulations de la liaison articulée.

Dans ce cas, lorsque le plateau auxiliaire est monté axialement entre le plateau tournant et le plateau non-tournant, il est avantageux, pour simplifier la réalisation des articulations, que l'unique bras de chaque liaison articulée soit relié par ladite partie d'extrémité opposée au levier de commande par la troisième articulation et, entre ses parties d'extrémité, au plateau tournant par la première articulation.

Toutefois, selon une seconde architecture possible, chaque liaison articulée peut comprendre deux bras articulés l'un sur l'autre par une quatrième articulation distincte des première et seconde articulations, et dont un premier bras est relié au plateau tournant par la première articulation et le second bras est relié à la bielle de pas correspondante par la seconde articulation, le levier de commande correspondant étant relié à l'un au moins des deux bras par la troisième articulation, tandis qu'un second levier s'articule de plus par une cinquième articulation sur la liaison articulée et/ou la bielle de pas correspondante, et par ailleurs sur le plateau tournant.

Dans ce cas, également pour simplifier la réalisation des articulations, il est avantageux que, pour chaque liaison articulée, la troisième et la quatrième articulations soient confondues et/ou que la seconde et la cinquième articulations soient confondues.

Avec cette seconde architecture, si le plateau tournant est monté axialement entre le plateau non-tournant et le plateau auxiliaire, il est avantageux que le plateau tournant présente, pour chaque liaison articulée, un support sur lequel est articulée une extrémité du second levier correspondant et qui est traversé par le levier de commande correspondant.

Par contre, si le plateau auxiliaire est monté axialement entre le plateau non-tournant et le plateau tournant, il est alors avantageux que le plateau tournant présente, pour chaque liaison articulée, un passage traversé par le levier de commande correspondant ainsi qu'un support sur lequel est articulée une extrémité du second levier correspondant.

Dans les différentes architectures, il est avantageux que le plateau auxiliaire soit monté rotatif sur le plateau non-tournant à l'aide d'au moins un roulement excentré par rapport à l'axe du plateau non-tournant.

L'entrainement en rotation du plateau auxiliaire par le plateau tournant peut être assuré soit par l'intermédiaire d'au moins un compas tournant articulé d'une part sur le plateau tournant et d'autre part sur le plateau auxiliaire, soit par l'intermédiaire d'au moins un levier de commande et d'au moins un bras d'au moins une liaison articulée correspondante. Dans ce dernier cas, le levier de commande et la liaison articulée considérés remplissent la fonction d'un compas tournant.

Dans ces différentes architectures également, l'excentration définie du plateau auxiliaire par rapport au plateau non-tournant peut être fixe et prédéterminée par la structure des plateaux ainsi que par le montage du plateau auxiliaire sur le plateau non-tournant, mais il est avantageux que cette excentration définie soit variable et déterminée par un système d'excentration supporté par le plateau non-tournant, afin que la composante bicyclique du pas des pales soit parfaitement adaptée à la configuration instantanée du vol.

A cet effet, et selon une structure simple, le système d'excentration comprend avantageusement, d'une part, un plateau intermédiaire, retenu axialement par rapport au plateau non-tournant mais monté coulissant dans un plan radial par rapport au plateau non-tournant, et sur lequel le plateau auxiliaire est monté rotatif à l'aide d'au moins un roulement, et, d'autre part, au moins deux actionneurs supportés par le plateau non-tournant et commandant chacun les déplacements du plateau intermédiaire par rapport au plateau non-tournant dans l'une respectivement de deux directions différentes, afin de donner l'excentration définie à un équipage mobile comprenant le plateau auxiliaire, le plateau intermédiaire et le ou les roulements interposés entre eux.

Selon une structure avantageusement simple pour commander les déplacements de l'équipage mobile par rapport au plateau non-tournant, chacun des deux actionneurs s'articule par une extrémité sur le plateau non-tournant et par l'autre extrémité au voisinage d'une extrémité de l'une respectivement de deux bielles articulées chacune dans sa partie centrale en un point fixe sur le plateau non-tournant, l'autre extrémité de l'une des bielles s'articulant en un point fixe sur le plateau intermédiaire afin d'assurer l'arrêt en rotation de ce dernier, tandis que l'autre extrémité de l'autre bielle s'articule sur une biellette articulée par ailleurs en un point fixe sur le plateau intermédiaire.

En variante, l'arrêt en rotation du plateau intermédiaire peut être assuré par au moins un compas non-tournant, articulé d'une part sur le plateau intermédiaire et, d'autre part, sur le plateau non-tournant, auquel cas chacune des deux bielles est articulée par son autre extrémité sur une biellette respective, articulée par ailleurs en un point fixe respectif sur le plateau intermédiaire.

Dans ces deux cas, il est avantageux que les deux actionneurs soient identiques et que les deux bielles soient identiques et déplacent chacune le plateau intermédiaire dans l'une respectivement de deux directions sensiblement perpendiculaires l'une à l'autre.

Pour améliorer la rapidité et la précision du fonctionnement du dispositif de l'invention, et optimiser la commande bicyclique de pas, il est de plus avantageux que les actionneurs soient commandés par au moins un calculateur recevant au moins des signaux témoignant des positions des commandes de vol et/ou au moins des signaux témoignant de valeurs de paramètres du vol. Ces actionneurs peuvent être choisis parmi les types connus d'actionneurs comprenant notamment les vérins électriques et les servocommandes.

Dans un exemple simple de montage du plateau intermédiaire sur le plateau non-tournant, le plateau intermédiaire est retenu axialement sur le plateau non-tournant à l'aide d'au moins un boulon traversant une entretoise tubulaire disposée dans une lumière ménagée dans le plateau intermédiaire de manière à présenter un jeu permettant les coulissements du plateau intermédiaire par rapport au plateau non-tournant dans un plan radial par rapport à l'axe de ce dernier, sous la commande des actionneurs du système d'excentration.

L'avantage essentiel du dispositif de commande de pas des pales d'un rotor d'hélicoptère selon l'invention est qu'il permet de piloter la commande de pas bicyclique passive en phase et en amplitude d'une manière adaptée à la configuration du vol. Par cette commande bicyclique passive, la survenance du décrochage sur la ou les pales reculantes du rotor peut être retardée, et des gains de puissance obtenus, non seulement au voisinage du décrochage du rotor, mais plus généralement par la réduction d'effets défavorables obtenue par la diminution de l'incidence locale des pales reculantes, en repoussant un certain nombre de limites liées au phénomène du décrochage des pales reculantes, tels que le niveau vibratoire en cabine, les moments dynamiques le long des pales et les efforts de commande.

Il est à noter de plus que le dispositif de l'invention peut être monté en rattrapage sur les rotors d'hélicoptères existants, que ces rotors soient du type articulé, à balancier ou rigide.

D'autres caractéristiques et avantages de l'invention ressortiront de la description donnée ci-dessous, à titre non limitatif, d'exemples de réalisation décrits en référence aux dessins annexés sur lesquels :
- la figure 1 représente schématiquement en coupe axiale un rotor principal d'hélicoptère et un premier exemple de dispositif de commande de pas selon l'invention, limité à une pale,
- la figure 2 est une vue schématique de dessus, suivant II de la figure 1, du dispositif de commande de pas dont les liaisons articulées sont représentées rabattues dans le plan de la figure 1,
- la figure 3 est une vue schématique en coupe axiale d'un second exemple de dispositif de commande de pas,
- la figure 4 est une vue schématique en plan du système d'excentration du dispositif de la figure 3,
- la figure 5 est une vue schématique d'un troisième exemple de dispositif de commande de pas, en coupe axiale suivant le plan V-V de la figure 6, pour un rotor quadripale,
- les figures 6 et 7 sont des vues en coupe schématique suivant respectivement VI-VI et VII-VII de la figure 5,
- la figure 8 est une vue partielle en élévation latérale selon VIII-VIII de la figure 5,
- la figure 9 est une vue en élévation latérale extérieure de la partie inférieure du dispositif de la figure 5,
- la figure 10 est une vue en coupe schématique selon X-X de la figure 9, et
- les figures 11 et 12 sont des vues analogues respectivement aux figures 7 et 10 pour des variantes de réalisation.

Dans les différents exemples de dispositifs décrits ci-dessous, les mêmes références numériques sont utilisées pour désigner les éléments identiques ou analogues des dispositifs, et éventuellement affectées d'un symbole ' ou ''.

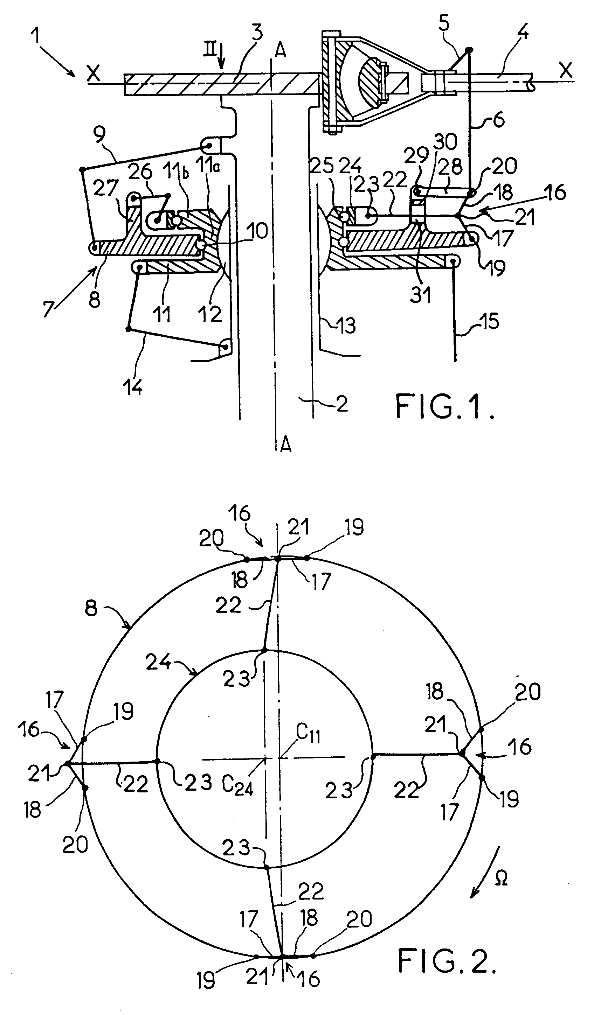

Sur la figure 1, un rotor principal 1 d'hélicoptère, représenté schématiquement, comprend un mât rotor 2 entrainé par sa base en rotation autour de l'axe de rotation A-A du rotor, et solidaire à son extrémité supérieure d'un moyeu 3. Chacune des pales telles que 4 du rotor est reliée au moyeu 3 de sorte à être entraînée en rotation avec ce dernier autour de l'axe rotor A-A, et de manière à pouvoir pivoter par rapport au moyeu 3 autour de son axe longitudinal de changement de pas X-X, sensiblement radial par rapport à l'axe A-A. Pour modifier le pas de la pale 4, ou son incidence autour de son axe de pas X-X, la pale 4 est solidaire en rotation autour de cet axe X-X d'un levier de pas 5. Pour commander le pas de la pale 4, le levier 5 est commandé par une bielle de pas 6, sensiblement parallèle à l'axe rotor A-A, et reliée par son extrémité inférieure au plateau tournant 8 d'un mécanisme à plateaux cycliques 7.

Dans ce mécanisme 7, de manière classique, le plateau tournant 8 est entraîné en rotation par le mât rotor 2 à l'aide d'au moins un compas tournant 9 articulé par une extrémité sur le mât 2 et par l'autre extrémité sur le plateau tournant 8. Ce dernier est de plus monté en rotation, à l'aide d'un roulement à billes 10, coaxialement sur un plateau non tournant 11, qui peut s'incliner dans toute direction par rapport à l'axe A-A autour du mât 2 en étant monté par son moyeu lla autour d'une rotule centrale 12, et qui peut être translaté parallèlement à l'axe rotor A-A par le coulissement axial de la rotule 12 autour d'un guide tubulaire cylindrique 13 non tournant, car fixé à des points fixes de la structure de l'hélicoptère. Le plateau non tournant 11 est retenu contre toute rotation autour de l'axe rotor A-A par un compas non tournant 14 articulé par une extrémité sur le plateau non tournant 11 et par l'autre à la base du guide cylindrique 13. Les mouvements d'oscillation et de translation du plateau non tournant 11 sont commandés par des actionneurs de commande de vol, en général au nombre de trois, et dont un seul 15 est représenté sur la figure 1, et pouvant être des bielles, des vérins ou des servocommandes.

Dans les dispositifs classiques de commande de pas, l'extrémité inférieure de chaque bielle de pas 6 est directement articulée sur le plateau tournant 8.

Mais, dans ce premier exemple de dispositif de l'invention, pour chaque pale 4, une liaison articulée 16, comprenant deux bras 17 et 18 et trois articulations 19, 20 et 21, est montée en série entre le plateau tournant 8 et la bielle de pas 6. Le premier bras 17 de cette liaison 16 est relié par son extrémité inférieure par la première articulation 19 à un point fixe du pourtour du plateau tournant 8, tandis que l'extrémité supérieure du second bras 18 de la liaison 16 est reliée par la seconde articulation 20 à l'extrémité inférieure de la bielle de pas 6.

De plus, la liaison articulée 16 est également articulée par la troisième articulation 21 à l'extrémité radiale externe d'un levier de commande 22, propre à chaque liaison articulée 16, et dont l'extrémité radiale interne est reliée par une articulation 23 à un point fixe du pourtour d'un plateau auxiliaire 24.

Le plateau 24, de forme annulaire et section circulaire, est monté rotatif par un roulement à billes 25 autour de la partie supérieure 11b du moyeu 11a du plateau non-tournant 11, cette partie supérieure 11b étant cylindrique de section circulaire, mais excentrée d'une valeur fixe et prédéterminée par construction par rapport à l'axe du plateau non-tournant 11. Deux compas tournants, tels que 26, sont chacun articulés par une extrémité dans une chape radiale externe du plateau auxiliaire 24 et par l'autre extrémité dans une chape supérieure d'une oreille de support 27 du plateau tournant 8, de sorte que le plateau auxiliaire 24 est entraîné en rotation par le plateau tournant 8. De plus, chaque liaison articulée 16 est également articulée par la seconde articulation 20 à l'extrémité radiale externe d'un second levier 28, qui est propre à cette liaison 16 et dont l'extrémité radiale interne est articulée par l'articulation 29 dans une chape à l'extrémité supérieure d'une oreille de support 30 du plateau tournant 8, cette oreille 30 présentant un passage 31 traversé par le levier de commande 22 correspondant, du fait que, dans cette architecture, le plateau tournant 8 est disposé axialement entre le plateau non-tournant 11 et le plateau auxiliaire 24.

Il est à noter que les articulations du levier de commande 22 et du second levier 28 sur la liaison articulée 16 peuvent ne pas être confondues avec respectivement la troisième et la seconde articulation 21 et 20, mais peuvent se faire, pour le levier 22, en n'importe quel point des bras 17 et 18 autre que les articulations 19 et 20, les bras 17 et 18 s'articulant alors l'un sur l'autre par une quatrième articulation, et, pour le levier 28, en une cinquième articulation sur un point du bras 18 ou de la partie inférieure de la bielle de pas 6.

Le plateau auxiliaire 24 étant excentré d'une valeur voulue, fixe et prédéterminée par la structure des plateaux non-tournant 11 et auxiliaire 24 et par leur montage l'un sur l'autre par le roulement 25, lorsque le plateau auxiliaire 24 tourne avec le plateau tournant 8, chacun des leviers de commande 22 est déplacé sensiblement radialement alternativement vers l'extérieur et vers l'intérieur, et donne des mouvements angulaires aux bras 17 et 18 de la liaison articulée 16 correspondante, qui déplace la bielle de pas correspondante 6 de façon à commander le pas de la pale 4 correspondante de la manière souhaitée, avec une phase et une amplitude d'une composante bi-cyclique adaptée au vol.

La figure 2, sur laquelle les liaisons articulées 16 sont schématiquement rabattues dans le plan de la figure, représente les déplacements et déformations des leviers 22 et liaisons 16 procurant la commande de pas souhaitée. Le centre de rotation C24 du plateau auxiliaire 24 étant excentré sur la gauche de l'axe central C11 du plateau non-tournant 11, et le sens de rotation du rotor étant celui de la flèche Ω, comme indiqué sur la figure 2, pour un pas collectif et un pas cyclique donnés, c'est-à-dire pour une position axiale fixe et pour une inclinaison fixe, données par les actionneurs 15, au plateau non-tournant 11 le long de et sur l'axe A-A, la liaison 16 à droite sur la figure 2 occupe la position de pas minimum de la pale 4 correspondante, car le levier 22 et l'articulation 21 sont rapprochés au maximum radialement vers l'axe central C11, et les bras 17 et 18 de cette liaison 16 sont inclinés au maximum vers l'intérieur par rapport aux articulations 19 et 20. A partir de cette position, dans le secteur inférieur droit de la figure 2, le levier 22 et l'articulation 21 sont progressivement déplacés radialement vers l'extérieur par rapport à l'axe central C11, ce qui correspond à une augmentation progressive du pas jusqu'à la position de la liaison 16 en bas sur la figure 2, pour laquelle les bras 17 et 18 sont alignés dans le prolongement l'un de l'autre, ce qui correspond à une articulation 20 et une bielle de pas 6 relevées au maximum, et donc à un pas maximum de la pale 4. A partir de cette position, et jusqu'à celle de la liaison 16 sur la gauche de la figure 2, c'est-à-dire dans le secteur inférieur gauche de la figure 2, le levier 22 et l'articulation 21 continuent à être progressivement déplacés radialement vers l'extérieur par l'excentration du plateau auxiliaire 24 par rapport au plateau non-tournant 11. Les bras 17 et 18 sont progressivement inclinés l'un par rapport à l'autre et radialement vers l'extérieur par rapport aux articulations 19 et 20, ce qui correspond à un abaissement de l'articulation 20, donc à une traction vers le bas sur la bielle de pas 6, donc à une diminution progressive du pas de la pale 4, du pas maximum pour la position inférieure sur la figure 2 au pas minimum pour la position de gauche, diamétralement opposée à la position de droite correspondant également au pas minimum. Puis, dans le secteur supérieur gauche sur la figure 2, le levier 22 et l'articulation 21 sont progressivement rapprochés radialement de l'axe central C11, de sorte que les bras 17 et 18 reviennent vers l'intérieur jusqu'à leur position d'alignement, ce qui correspond à une augmentation du pas jusqu'au pas maximum pour la liaison 16 en haut sur la figure 2, et enfin, sur le secteur supérieur de droite du rotor, les bras 17 et 18 s'inclinent l'un par rapport à l'autre et radialement vers l'intérieur des articulations 19 et 20, ce qui correspond à une nouvelle diminution progressive du pas jusqu'à la position de pas minimum sur la droite de la figure 2.

Ainsi, sur une rotation complète du rotor, donc sur un cycle, les liaisons articulées 16, les leviers de commande 22 et le plateau auxiliaire rotatif et excentré 24 commandent en alternance deux diminutions et deux augmentations symétriques du pas de chaque pale 4, qui s'ajoutent aux pas collectif et cyclique résultant de la position axiale et de l'inclinaison du plateau non-tournant 11, c'est-à-dire que le dispositif de l'invention introduit une composante de pas bicyclique, dont l'amplitude et la phase sont définies par la géométrie des liaisons 16, des leviers de commande 22, du plateau auxiliaire 24 et de l'excentration de ce dernier par rapport au plateau non-tournant 11.

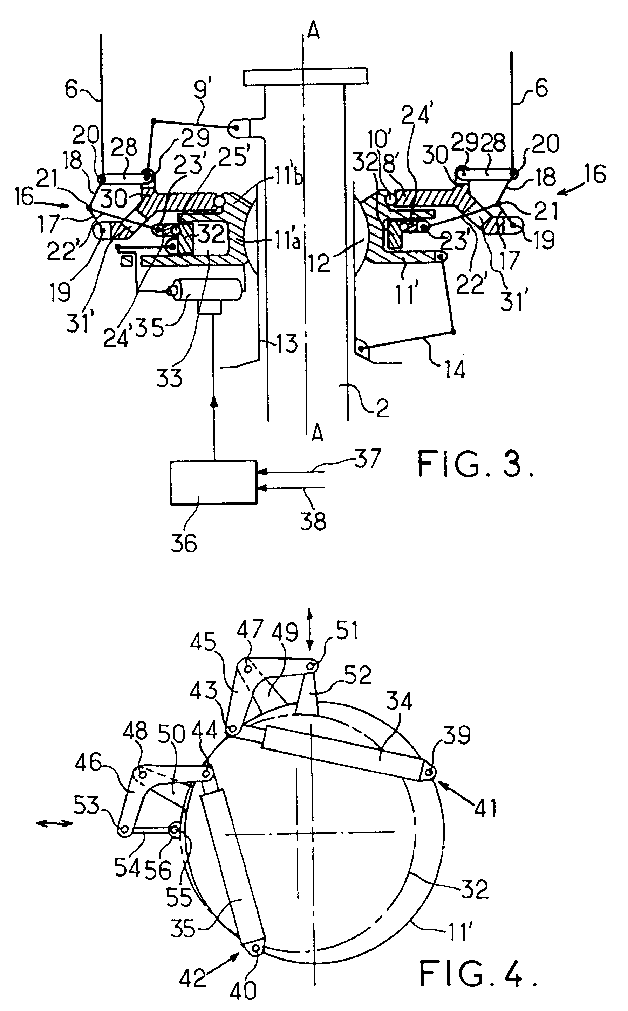

Par rapport à l'exemple de la figure 1, le dispositif de commande de pas des figures 3 et 4 présente trois différences principales, qui sont la disposition du plateau auxiliaire 24' axialement entre le plateau non-tournant 11' et le plateau tournant 8', l'entraînement du plateau auxiliaire 24' en rotation par le plateau tournant 8' à l'aide d'un levier de commande 22', d'une liaison articulée 16 et d'un second levier 28, à la place du compas tournant 26 de la figure 1, et surtout une excentration définie du plateau auxiliaire 24' par rapport au plateau non-tournant 11' qui est variable et déterminée par un système d'excentration supporté par le plateau non-tournant 11'.

Sur la figure 3, le plateau tournant 8' est monté en rotation par le roulement à billes 10' coaxialement autour de la partie supérieure 11'b du plateau non-tournant 11', tandis que le plateau auxiliaire 24' est monté mobile transversalement, pour avoir l'excentration voulue, dans un plan radial par rapport à l'axe du plateau non-tournant 11', et est logé dans un évidement radial 33, ouvert vers l'extérieur, et délimité entre la partie inférieure du plateau non-tournant 11', son moyeu 11'a et sa partie supérieure 11'b. De ce fait, pour chaque liaison articulée 16, identique à celle de l'exemple précédent, c'est-à-dire dont les deux bras 17 et 18 sont articulés l'un sur l'autre par une extrémité à l'aide d'une articulation centrale 21, et dont le bras 17 est articulé par son autre extrémité sur le plateau tournant 8' par l'articulation 19, tandis que le bras 18 est articulé en 20 par son autre extrémité simultanément sur l'extrémité inférieure de la bielle de pas 6 correspondante et sur l'extrémité externe du second levier 28 correspondant, lui-même articulé par son extrémité interne en 29 sur l'oreille 30 du plateau tournant 8', le plateau tournant 8' présente dans une partie conique entre les oreilles 30 et les chapes externes recevant les articulations 19, un passage 31' ménagé à la base de chaque oreille 30 correspondante, pour le passage du levier de commande 22' correspondant, articulé par son extrémité interne en 23' sur le plateau auxiliaire 24' et par son extrémité externe sur l'articulation centrale 21.

Le plateau tournant 8' est solidaire en rotation du mât rotor 2 par le compas tournant 9', articulé par une extrémité sur une chape du mât 2 et par l'autre extrémité dans la chape supérieure d'une oreille 30 par l'articulation 29 du second levier 28 correspondant, de sorte que ce second levier 28, la liaison articulée 16 et le levier de commande 22' correspondants transmettent la rotation du plateau tournant 8' au plateau auxiliaire 24'.

Comme précédemment, le moyeu 11'a du plateau non-tournant 11', retenu par le compas non-tournant 14, peut s'incliner sur la rotule 12, qui peut coulisser le long du tube 13 fixé autour du mât rotor 2, par les manoeuvres de trois actionneurs de commande de vol (non représentés) articulés sur le plateau non-tournant 11'.

Comme dans l'exemple de la figure 1, le plateau auxiliaire 24' est excentré par rapport au plateau non-tournant 11' d'une valeur définie telle que chacun des leviers 22' commande le pas de la pale correspondante en lui appliquant une composante bi-cyclique, dont la phase et l'amplitude sont adaptées à la configuration du vol par l'excentration définie qui, dans cet exemple des figures 3 et 4, est variable et obtenue au moyen d'un système d'excentration supporté par le plateau non-tournant 11', et représenté sur la partie inférieure de la figure 3 et sur la figure 4.

Ce système d'excentration comprend un plateau intermédiaire 32, non-tournant, retenu axialement sur le plateau non-tournant 11', mais monté coulissant transversalement, dans un plan radial par rapport au plateau non-tournant 11', dans le logement annulaire 33 délimité dans ce dernier autour du moyeu 11'a, et le plateau auxiliaire 24' est monté rotatif autour du plateau intermédiaire 32 à l'aide du roulement à billes 25'. Le système d'excentration comprend de plus deux actionneurs 34 et 35, dont un seul est représenté sur la figure 3, pour commander les déplacements de l'équipage mobile constitué par le plateau intermédiaire 32, le roulement 25' et le plateau auxiliaire 24' par rapport au plateau non-tournant 11'. Les actionneurs 34 et 35 sont linéaires, identiques l'un à l'autre, constitués par exemple par des vérins électriques ou des servocommandes, et montés sous le plateau non-tournant 11'. Chacun des actionneurs 34 et 35 commande les déplacements du plateau intermédiaire 32 dans l'une respectivement de deux directions différentes, de façon à donner à l'équipage mobile 32-25'-24' la position procurant l'excentration voulue du plateau auxiliaire 24'. A cet effet, les actionneurs 34 et 35 sont pilotés par un calculateur 36, fixé à la structure de l'hélicoptère, et qui élabore des ordres de commande transmis aux actionneurs 34 et 35 à partir de signaux reçus en 37 des commandes de vol, par exemple des signaux de consigne de position des actionneurs tels que 15 sur la figure 1, commandant la position du plateau non-tournant 11', et de signaux témoignant de paramètres de vol, reçus en 38.

Les actionneurs 34 et 35 sont articulés chacun par une extrémité de leur cylindre ou corps respectivement en 39 et 40 sur un support 41 ou 42 fixé au pourtour du plateau non-tournant 11', et par l'extrémité de leur tige respectivement en 43 et 44 sur une extrémité de l'une de deux bielles coudées identiques respectivement 45 et 46, articulées par leur partie centrale respectivement en des points fixes 47 et 48 sur l'une respectivement de deux oreilles 49 et 50 en saillie radiale vers l'extérieur sur le pourtour du plateau non-tournant 11'.

L'autre extrémité de l'une des bielles 45 est articulée en un point fixe 51 sur l'extrémité d'une oreille 52 en saillie radiale vers l'extérieur sur le pourtour du plateau intermédiaire 32, ce qui assure l'arrêt en rotation du plateau 32, tandis que l'autre extrémité de l'autre bielle 46 est articulée en 53 sur l'extrémité radiale externe d'une biellette 54, articulée en un point fixe 55 par son extrémité radiale interne sur une oreille 56 fixée au pourtour du plateau intermédiaire 32. Cette biellette 54 est prévue pour assurer deux degrés de liberté et éviter un second arrêt en rotation du plateau intermédiaire 32 non-tournant, car, sinon, les mouvements de coulissement transversal du plateau 32 dans le plan de la figure 4 (plan radial pour le plateau non-tournant 11') seraient empêchés, et le plateau intermédiaire 32 serait bloqué.

Grâce aux bielles coudées 45 et 46, chacun des actionneurs 34 et 35 commande les déplacements du plateau intermédiaire 32 dans l'une respectivement de deux directions sensiblement perpendiculaires.

Pour le reste, ce dispositif des figures 3 et 4 fonctionne comme celui de la figure 1, et comme expliqué en référence à la figure 2.

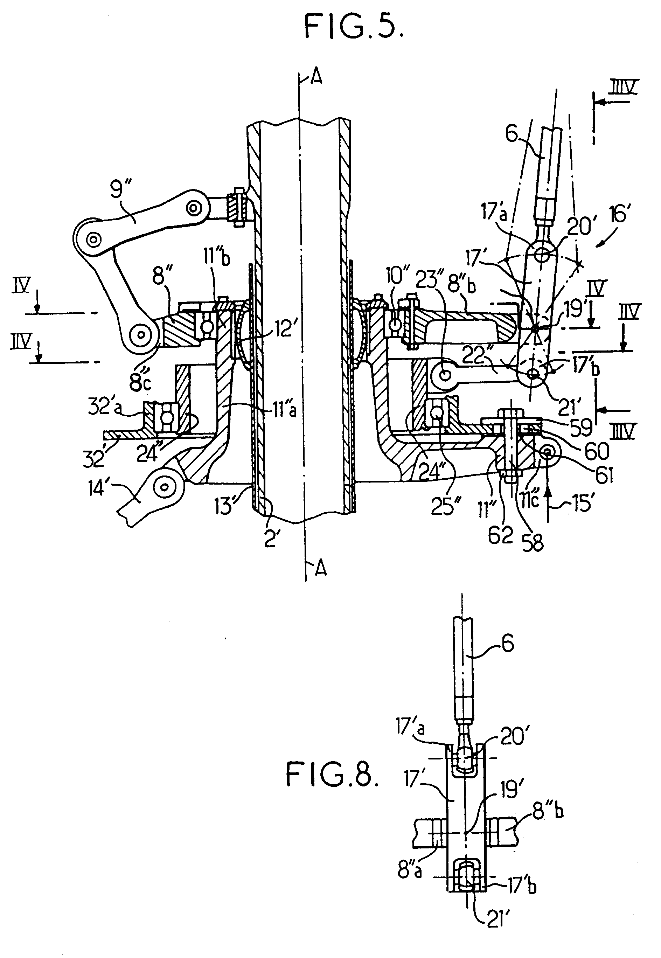

L'exemple de dispositif de commande de pas des figures 5 à 10 a en commun avec celui des figures 3 et 4 que l'excentration définie du plateau auxiliaire 24'' par rapport au plateau non-tournant 11'' est variable et déterminé par un système d'excentration analogue, supporté par le plateau non-tournant 11'', et comprenant un plateau intermédiaire 32' non-tournant, sur lequel le plateau auxiliaire 24'' est monté rotatif, et deux actionneurs 34' et 35' coopérant chacun avec l'une respectivement de deux bielles 45' et 46' pour déplacer le plateau intermédiaire 32' transversalement par rapport au plateau non-tournant 11'', et également que le plateau auxiliaire 24'' et le plateau intermédiaire 32' sont disposés axialement entre le plateau non-tournant 11'' et le plateau tournant 8''.

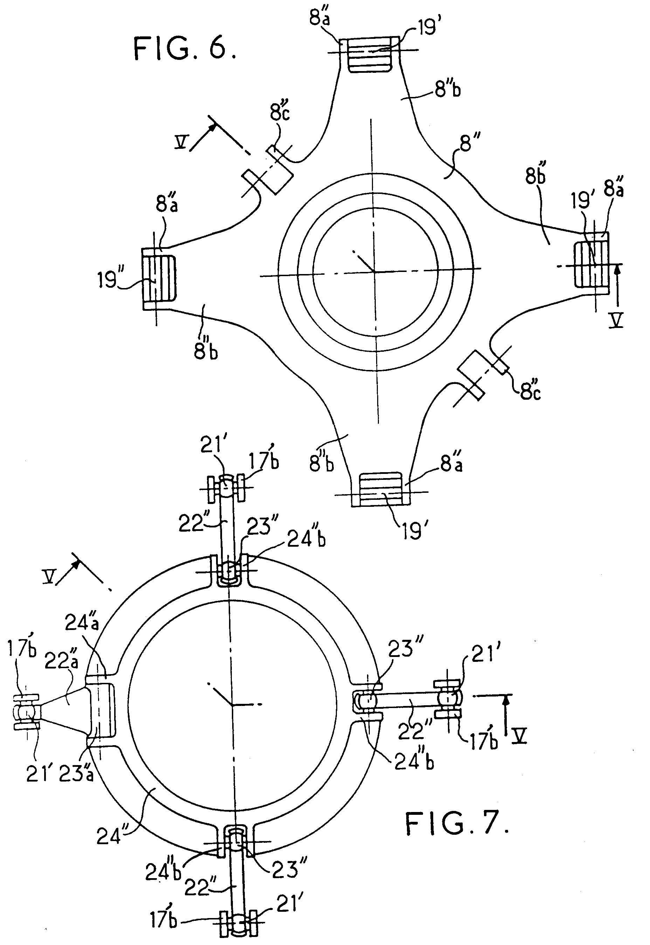

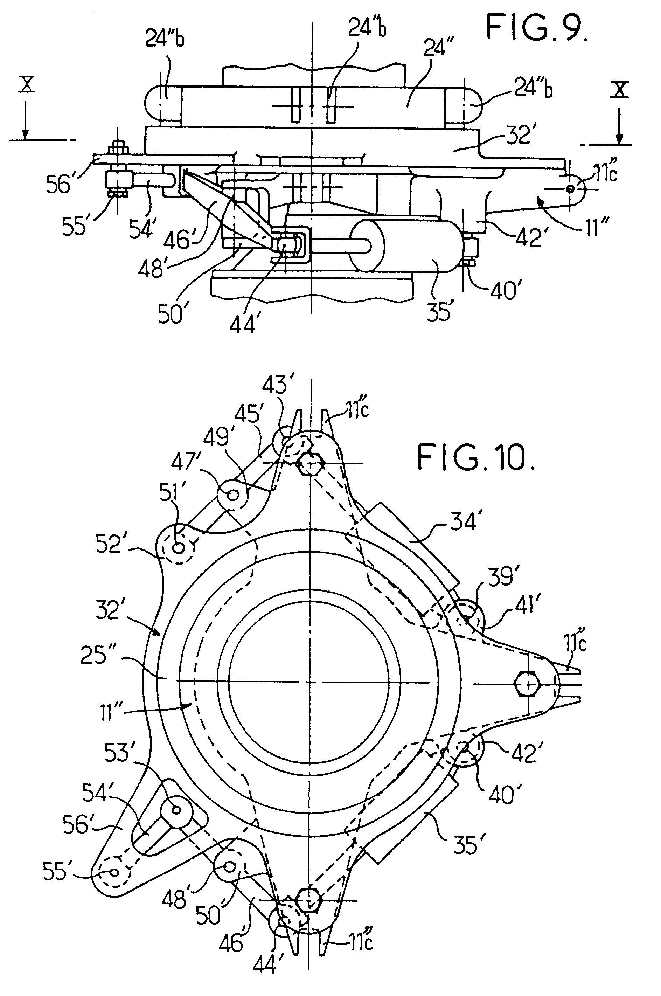

Mais une différence importante du dispositif des figures 5 à 10 par rapport à celui des figures 3 et 4 comme par rapport à celui de la figure 1 est que la liaison articulée 16', pour chaque pale, ne comprend qu'un seul bras 17', dont l'extrémité supérieure, agencée en chape 17'a, est reliée à l'extrémité inférieure de la bielle de pas 6 correspondante par l'articulation 20' constituée d'un embout à rotule d'extrémité de la bielle 6 retenue par un axe transversal dans la chape 17'a, l'extrémité inférieure du bras 17', également agencée en chape 17'b, étant reliée à l'extrémité externe du levier de commande 22'' correspondant par une articulation 21' également constituée d'un embout à rotule d'extrémité du levier 22'' retenue par un axe transversal dans la chape 17'b, tandis que par sa partie centrale, entre les chapes 17'a et 17'b, le bras 17' est relié au plateau tournant 8'' par l'articulation 19', constituée par une chape 8''a radiale externe à l'extrémité de l'un des quatre bras radiaux 8''b du plateau tournant 8'', prévu pour un rotor à quatre pales (voir figures 6 et 8).

Dans cet exemple, le plateau tournant 8'' est monté en rotation par le roulement à billes 10'' coaxialement autour de la partie supérieure 11''b du moyeu 11''a du plateau non-tournant 11'', en étant entraîné en rotation par deux compas tournants tels que 9'', articulés chacun par son extrémité supérieure sur le mât rotor 2' et par son extrémité inférieure dans une chape radiale externe 8''c du plateau tournant 8'' (voir figures 5 et 6), tandis que le plateau non-tournant 11'' d'une part est relié à un point fixe de la structure de l'hélicoptère par le compas non-tournant 14', partiellement représenté sur la figure 5, et articulé sur la partie inférieure de son moyeu 11''a, et, d'autre part, peut s'incliner par rapport à l'axe A-A du mât 2 et coulisser le long de ce dernier en étant monté par la partie supérieure 11''b de son moyeu 11''a autour de la rotule 12', qui peut coulisser le long du guide tubulaire fixe 13' entourant le mât rotor 2', le plateau non-tournant 11'' étant manoeuvré par trois bielles de commande de vol, telles que celle schématisée en 15', articulées chacune par son extrémité supérieure dans l'une respectivement de trois chapes radiales externes 11''c du plateau non-tournant 11''.

Le plateau auxiliaire 24'' a la forme d'un tronc de cylindre de section circulaire disposé autour du moyeu 11''a, axialement entre le plateau tournant 8'' et le plateau non-tournant 11'', et monté en rotation par le roulement à billes 25'' à l'intérieur d'une portée cylindrique centrale 32'a coaxiale du plateau intermédiaire 32', retenu axialement sur le plateau non-tournant 11'' mais monté coulissant transversalement sur ce dernier par des moyens décrits ci-dessous.

La partie axiale supérieure du plateau auxiliaire 24'' présente quatre chapes radiales externes, dont l'une 24''a est plus large que les trois autres 24''b, identiques l'une à l'autre. Dans chacune des chapes 24''b, un axe transversal retient une rotule de l'extrémité interne de l'un respectivement de trois leviers de commande 22'' rectilignes et identiques, pour constituer l'articulation 23'' reliant ce levier 22'' au plateau auxiliaire 24'', tandis que le quatrième levier de commande 22''a est de forme triangulaire et plus large que les trois autres leviers 22'', pour faire fonction simultanément de compas d'entraînement du plateau auxiliaire 24'' en rotation par le plateau tournant 8'', par l'intermédiaire du bras 17' correspondant. Ce levier de commande 22''a est articulé sur le plateau auxiliaire 24'' par son extrémité interne conformée en douille retenue dans la chape élargie 24''a par un axe transversal, pour former l'articulation 23'a (voir figure 7).

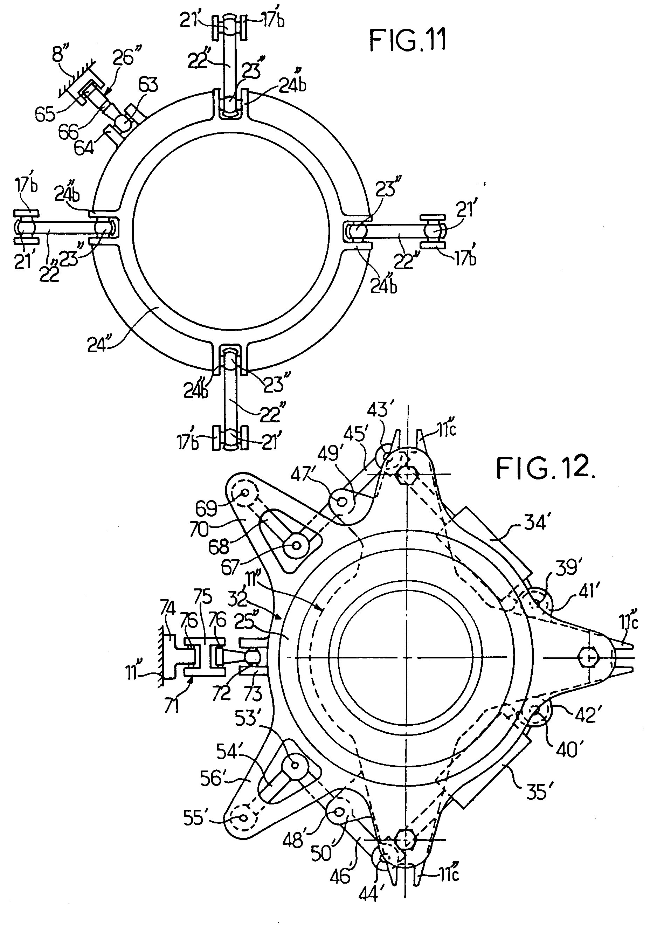

Dans la variante de la figure 11, l'entraînement en rotation du plateau auxiliaire 24'' par le plateau tournant 8'' est assuré par un compas tournant 26'', dont l'extrémité d'une branche est articulée par une rotule 63 dans une chape radiale externe 64 du plateau auxiliaire 24''. L'extrémité de l'autre branche du compas 26'' est articulée sur le plateau tournant 8'' par une liaison pivotante 65, et les deux branches du compas 26'' sont articulées l'une à l'autre par une autre liaison pivotante 66. Les quatre liaisons des leviers de commande 22'' au plateau auxiliaire 24'' et aux chapes 17'b des bras 17' sont alors identiques à celles assurées par les chapes 24''b recevant les rotules des articulations 23'' de la figure 7, et les quatre leviers 22'' sont rectilignes et identiques l'un à l'autre.

La retenue axiale du plateau intermédiaire 32' sur le plateau non-tournant 11'' est assurée par des boulons tels que 58, à tête appliquée contre la face supérieure d'une plaquette 59 au-dessus de la face supérieure du plateau intermédiaire 32', et recouvrant une lumière 60 ménagée dans ce plateau intermédiaire 32', et traversée par une entretoise tubulaire 61, elle-même traversée par la tige du boulon 58 correspondant, laquelle tige traverse également le plateau non-tournant 11', et sur l'extrémité inférieure de laquelle est vissé un écrou 62, la hauteur de l'entretoise 61 étant légèrement supérieure à la profondeur de la lumière 60 de façon à avoir entre la plaquette 59 et la face supérieure du plateau intermédiaire 32' un jeu permettant le coulissement du plateau intermédiaire 32' dans un plan radial par rapport au plateau non-tournant 11'', lors de la commande d'excentration à la valeur voulue, assurant, comme dans les exemples précédents, que chaque levier de commande 22'' ou 22''a commande le pas de la pale correspondante en lui appliquant une composante bi-cyclique commandée en phase et en amplitude adaptées à la configuration du vol.

A cet effet, les deux actionneurs 34' et 35' du système d'excentration sont montés sous le plateau non-tournant 11'' et commandent chacun les déplacements du plateau intermédiaire 32' dans l'une respectivement de deux directions différentes, afin de donner l'excentration voulue à l'équipage mobile constitué du plateau intermédiaire 32', du plateau auxiliaire 24'' et du roulement à billes 25''.

Chaque actionneur 34' ou 35' est articulé d'une part en 39' ou 40' respectivement par l'extrémité de son corps sur un support respectivement 41' ou 42' en saillie sur le pourtour du plateau non-tournant 11'', et, d'autre part, respectivement en 43' ou 44' par l'extrémité de sa tige sur une extrémité d'une bielle rectiligne respectivement 45' ou 46' articulée respectivement dans sa partie centrale en un point fixe 47' ou 48' sur un support respectivement 49' ou 50' en saillie sur le pourtour du plateau non-tournant 11''.

Par son autre extrémité, la bielle droite 45' est articulée en un point fixe 51' sur un support 52' en saillie sur le pourtour du plateau intermédiaire 32' pour assurer l'arrêt en rotation de ce dernier, tandis que l'autre extrémité de la bielle droite 46' est articulée en 53' sur l'extrémité radiale interne d'une biellette 54', prévue pour ne pas bloquer le plateau 32', et articulée par son extrémité radiale externe en un point fixe 55' sur l'extrémité radiale externe d'un support 56' en saillie sur le pourtour du plateau intermédiaire 32'. De la sorte, chaque couple constitué d'un actionneur 34' ou 35' et d'une bielle 45' ou 46' déplace le plateau intermédiaire 32' selon l'une respectivement de deux directions sensiblement perpendiculaires l'une à l'autre, les deux actionneurs étant identiques l'un à l'autre ainsi que les deux bielles.

Dans la variante de la figure 12, le montage des bielles droites 45' et 46' est identique et symétrique, car l'autre extrémité de la bielle 45' est, comme pour la bielle 46', articulée en 67 sur l'extrémité radiale interne d'une seconde biellette 68, identique à la biellette 54', et articulée par son extrémité radiale externe en un point fixe 69 sur l'extrémité radiale externe d'un autre support 70, en saillie sur le pourtour du plateau intermédiaire 32'. Dans ce cas, l'arrêt en rotation du plateau intermédiaire 32' est assuré par un compas non-tournant 71, dont une branche est articulée par une rotule 72 dans une chape 73 du plateau intermédiaire 32', dont l'autre branche est articulée par une liaison pivotante 74 sur le plateau non-tournant 11'', et dont les deux branches sont chacune articulée sur une pièce centrale en H 75 du compas 71 par une liaison pivotante 76.

Ce dispositif fonctionne comme celui décrit ci-dessus en référence aux figures 3 et 4.

En variante, dans un dispositif analogue à celui de la figure 5, le plateau tournant 8'' peut être disposé axialement entre le plateau auxiliaire 24'' et le plateau non-tournant 11''. Dans ce cas, chaque liaison articulée 16' a son unique levier 17' articulé par son extrémité inférieure sur le plateau tournant 8'' et dans sa partie centrale à l'extrémité externe du levier de commande 22'' correspondant, tandis que son extrémité supérieure reste articulée sur l'extrémité inférieure de la bielle de pas 6 correspondante.

## Revendications

1. Dispositif de commande du pas des pales d'un rotor de giravion, en particulier d'un rotor principal d'hélicoptère, sur lequel chaque pale (4) est, d'une part, entraînée en rotation autour d'un axe de rotation (A-A) d'un mât rotor (2, 2') par l'intermédiaire d'un moyeu (3), et, d'autre part, solidaire en rotation, autour d'un axe longitudinal de changement de pas (X-X), d'un levier de pas (5) commandé par une bielle de pas (6) reliée à un plateau (8, 8', 8'') tournant avec le mât rotor (2, 2') et appartenant à un mécanisme à plateaux cycliques (7) dans lequel le plateau tournant (8, 8', 8'') est monté en rotation sur un plateau non-tournant (11, 11', 11'') pouvant coulisser axialement (13, 13') le long du mât rotor (2, 2') et s'incliner (12, 12') dans toute direction par rapport au mât rotor (2, 2'), sous l'action d'actionneurs de commande de vol (15, 15'), caractérisé en ce qu'il comprend :
- un plateau auxiliaire (24, 24', 24''), solidaire en rotation du plateau tournant (8, 8', 8''), et monté rotatif avec une excentration définie sur le plateau non-tournant (11, 11', 11''), et
- pour chaque pale (4), une liaison articulée (16, 16'), qui comprend au moins un bras (17, 17'), par lequel elle est reliée au plateau tournant (8, 8', 8'') par une première articulation (19, 19'), et qui est montée en série avec la bielle de pas (6) correspondante en étant reliée à cette bielle de pas (6) par une seconde articulation (20, 20'), distincte de la première articulation (19, 19') ainsi que d'une troisième articulation (21, 21') par laquelle la liaison articulée (16, 16') est reliée à un levier de commande (22, 22', 22''), articulé par ailleurs sur le plateau auxiliaire (24, 24', 24'') tournant et excentré, de sorte que la rotation de ce dernier induise par chaque levier de commande (22, 22', 22'') des mouvements angulaires de chaque bras (17, 18, 17', 18') de la liaison articulée (16, 16') correspondante, qui déplace la bielle de pas (6) de façon à commander le pas de la pale (4) correspondante.

2. Dispositif de commande de pas selon la revendication 1, caractérisé en ce que chaque liaison articulée (16') comprend un unique bras (17') relié par une partie d'extrémité (17'a) à une extrémité de la bielle de pas (6) correspondante par la seconde articulation (20'), et par sa partie d'extrémité opposée (17'b) à l'une des première (19') et troisième (21') articulations de la liaison articulée (16') respectivement sur le plateau tournant (8'') et sur une partie d'extrémité du levier de commande (22'') correspondant, lequel est articulé (23'') par sa partie d'extrémité opposée sur le plateau auxiliaire (24''), tandis que le bras (17') est articulé, entre ses parties d'extrémité, à l'autre des première (19') et troisième (21') articulations de la liaison articulée (16').

3. Dispositif de commande de pas selon la revendication 2, caractérisé en ce que le plateau auxiliaire (24'') est monté axialement entre le plateau tournant (8'') et le plateau non-tournant (11''), et l'unique bras (17') de chaque liaison articulée (16') est relié par ladite partie d'extrémité opposée (17'b) audit levier de commande (22'') par la troisième articulation (21') et, entre ses parties d'extrémité (17'a, 17'b), au plateau tournant (8'') par la première articulation (19').

4. Dispositif de commande de pas selon la revendication 1, caractérisé en ce que chaque liaison articulée (16) comprend deux bras (17, 18) articulés l'un sur l'autre par une quatrième articulation (21) distincte des première (19) et seconde (20) articulations, et dont un premier bras (17) est relié au plateau tournant (8, 8') par la première articulation (19) et le second bras (18) est relié à la bielle de pas (6) correspondante par la seconde articulation (20), le levier de commande (22, 22') correspondant étant relié à l'un au moins des deux bras (17, 18) par la troisième articulation (21), tandis qu'un second levier (28) s'articule de plus par une cinquième articulation (20) sur la liaison articulée (16) et/ou la bielle de pas (6) correspondante, et par ailleurs (29) sur le plateau tournant (8, 8').

5. Dispositif de commande de pas selon la revendication 4, caractérisé en ce que, pour chaque liaison articulée (16), la troisième et la quatrième articulations sont confondues (21).

6. Dispositif de commande de pas selon l'une des revendications 4 et 5, caractérisé en ce que, pour chaque liaison articulée (16), la seconde et la cinquième articulations sont confondues (20).

7. Dispositif de commande de pas selon l'une quelconque des revendications 4 à 6, caractérisé en ce que le plateau tournant (8) est monté axialement entre le plateau non-tournant (11) et le plateau auxiliaire (24), et présente, pour chaque liaison articulée (16), un support (30) sur lequel est articulée (29) une extrémité du second levier (28) correspondant et qui est traversé (31) par le levier de commande (22) correspondant.

8. Dispositif de commande de pas selon l'une quelconque des revendications 4 à 6, caractérisé en ce que le plateau auxiliaire (24') est monté axialement entre le plateau non-tournant (11') et le plateau tournant (8'), et ce dernier présente, pour chaque liaison articulée (16), un passage (31') traversé par le levier de commande (22') correspondant et un support (30) sur lequel est articulée (29) une extrémité du second levier (28) correspondant.

9. Dispositif de commande de pas selon l'une quelconque des revendications 1 à 8, caractérisé en ce que le plateau auxiliaire (24, 24', 24'') est monté rotatif sur le plateau non-tournant (11, 11', 11'') à l'aide d'au moins un roulement (25, 25', 25'') excentré par rapport à l'axe du plateau non-tournant (11, 11', 11'').

10. Dispositif de commande de pas selon l'une quelconque des revendications 1 à 9, caractérisé en ce que le plateau auxiliaire (24, 24'') est entraîné en rotation par le plateau tournant (8, 8'') par l'intermédiaire d'au moins un compas tournant (26, 26'') articulé d'une part sur le plateau tournant (8, 8'') et d'autre part sur le plateau auxiliaire (24, 24'').

11. Dispositif de commande de pas selon l'une quelconque des revendications 1 à 9, caractérisé en ce que le plateau auxiliaire (24', 24'') est entraîné en rotation par le plateau tournant (8', 8'') par l'intermédiaire d'au moins un levier de commande (22', 22'') et d'au moins un bras (17, 17') d'au moins une liaison articulée correspondante (16, 16').

12. Dispositif de commande de pas selon l'une quelconque des revendications 1 à 11, caractérisé en ce que l'excentration définie du plateau auxiliaire (24) par rapport au plateau non-tournant (11) est fixe et prédéterminée par la structure desdits plateaux et le montage du plateau auxiliaire (24) sur le plateau non-tournant (11).

13. Dispositif de commande de pas selon l'une quelconque des revendications 1 à 11, caractérisé en ce que l'excentration définie du plateau auxiliaire (24', 24'') par rapport au plateau non-tournant (11', 11'') est variable et déterminée par un système d'excentration supporté par le plateau non-tournant (11', 11'').

14. Dispositif de commande de pas selon la revendication 13, caractérisé en ce que le système d'excentration comprend, d'une part, un plateau intermédiaire (32, 32'), retenu axialement par rapport au plateau non-tournant (11', 11'') mais monté coulissant dans un plan radial par rapport au plateau non-tournant (11', 11''), et sur lequel le plateau auxiliaire (24', 24'') est monté rotatif à l'aide d'au moins un roulement (25', 25''), et, d'autre part, au moins deux actionneurs (34, 34', 35, 35') supportés par le plateau non-tournant (11', 11'') et commandant chacun les déplacements du plateau intermédiaire (32, 32') par rapport au plateau non-tournant (11', 11'') dans l'une respectivement de deux directions différentes, afin de donner l'excentration définie à un équipage mobile comprenant le plateau auxiliaire (24', 24''), le plateau intermédiaire (32, 32') et le ou les roulements (25', 25'') interposés entre eux.

15. Dispositif de commande de pas selon la revendication 14, caractérisé en ce que chacun des deux actionneurs (34, 34', 35, 35') s'articule par une extrémité sur le plateau non-tournant (11', 11'') et par l'autre extrémité au voisinage d'une extrémité de l'une respectivement de deux bielles (45, 45', 46, 46') articulées chacune dans sa partie centrale en un point fixe (47, 47' ; 48, 48') sur le plateau non-tournant (11', 11''), l'autre extrémité de l'une des bielles (45, 45') s'articulant en un point fixe (51, 51') sur le plateau intermédiaire (32, 32') afin d'assurer l'arrêt en rotation de ce dernier, tandis que l'autre extrémité de l'autre bielle (46, 46') s'articule sur une biellette (54, 54') articulée par ailleurs en un point fixe (55, 55') sur le plateau intermédiaire (32, 32').

16. Dispositif de commande de pas selon la revendication 14, caractérisé en ce que chacun des deux actionneurs (34', 35') s'articule par une extrémité sur le plateau non-tournant (11'') et par l'autre extrémité au voisinage d'une extrémité de l'une respectivement de deux bielles (45', 46') articulées chacune dans sa partie centrale en un point fixe (47', 48') sur le plateau non-tournant (11''), et par son autre extrémité sur une biellette respective (68, 54') articulée par ailleurs en un point fixe respectif (69, 55') sur le plateau intermédiaire (32'), dont l'arrêt en rotation est assuré par au moins un compas non-tournant (71) articulé, d'une part, sur le plateau intermédiaire (32'), et, d'autre part, sur le plateau non-tournant (11'').

17. Dispositif de commande de pas selon l'une des revendications 15 et 16, caractérisé en ce que les deux actionneurs (34, 35, 34', 35') sont identiques et les deux bielles (45, 46, 45', 46') sont identiques et déplacent chacune le plateau intermédiaire (32, 32') dans l'une respectivement de deux directions sensiblement perpendiculaires l'une à l'autre.

18. Dispositif de commande de pas selon l'une quelconque des revendications 14 à 17, caractérisé en ce que les actionneurs (34, 35) sont commandés par au moins un calculateur (36) recevant au moins des signaux (37) témoignant des positions des commandes de vol et/ou au moins des signaux (38) témoignant de valeurs de paramètres du vol.

19. Dispositif de commande de pas selon l'une quelconque des revendications 14 à 18, caractérisé en ce que les actionneurs (34, 35, 34', 35') sont choisis parmi les types comprenant les vérins électriques et les servocommandes.

20. Dispositif de commande de pas selon l'une quelconque des revendications 14 à 19, caractérisé en ce que le plateau intermédiaire (32') est retenu axialement sur le plateau non-tournant (11'') à l'aide d'au moins un boulon (58) traversant une entretoise (61) tubulaire disposée dans une lumière (60) ménagée dans le plateau intermédiaire (32') de manière à présenter un jeu permettant les coulissements du plateau intermédiaire (32') par rapport au plateau non-tournant (11'') dans un plan radial par rapport à l'axe de ce dernier, sous la commande des actionneurs (34', 35') du système d'excentration.

## Claims

1. Device for controlling the pitch of the blades of a rotorcraft rotor, particularly of a helicopter main rotor, in which each blade (4) is, on the one hand, driven in rotation about an axis (A-A) of rotation of a rotor mast (2, 2') via a hub (3) and, on the other hand, secured in terms of rotation about a longitudinal pitch-change axis (X-X) to a pitch lever (5) controlled by a pitch rod (6) joined to a plate (8,8',8'') which rotates with the rotor mast (2,2') and belongs to a swashplates mechanism (7), in which the rotating plate (8,8',8'') is mounted so that it can rotate on a non-rotating plate (11,11',11'') which can slide axially (13,13') along the rotor mast (2,2') and be inclined (12, 12') in any direction with respect to the rotor mast (2,2') under the action of flight-control actuators (15,15'), characterized in that it comprises:
- an auxiliary plate (24,24',24''), secured in terms of rotation to the rotating plate (8,8',8'') and mounted so that it can rotate with defined eccentricity on the non-rotating plate (11,11',11''), and
- for each blade (4), an articulated link (16,16') which comprises at least one arm (17,17') via which it is joined to the rotating plate (8,8',8'') by a first articulation (19,19') and which link is mounted in series with the corresponding pitch rod (6), being joined to this pitch rod (6) by a second articulation (20,20') separate from the first articulation (19,19'), as well as from a third articulation (21,21') via which the articulated link (16, 16') is joined to a control lever (22,22',22''), moreover articulated to the rotating and eccentric auxiliary plate (24,24',24'') so that the rotation of the latter induces, via each control lever (22,22',22''), angular movements of each arm (17,18,17',18') of the corresponding articulated link (16,16'), which moves the pitch rod (6) so as to control the pitch of the corresponding blade (4).

2. Pitch control device according to Claim 1, characterized in that each articulated link (16') comprises a single arm (17') joined by an end part (17'a) to one end of the corresponding pitch rod (6) by the second articulation (20'), and via its opposite end part (17'b) to one of the first (19') and third (21') articulations of the articulated link (16') respectively on the rotating plate (8'') and on an end part of the corresponding control lever (22''), which lever is articulated (23'') via its opposite end part to the auxiliary plate (24''), while the arm (17') is articulated, between its end parts, to the other of the first (19') and third (21') articulations of the articulated link (16').

3. Pitch-control device according to Claim 2, characterized in that the auxiliary plate (24'') is mounted axially between the rotating plate (8'') and the non-rotating plate (11''), and the single arm (17') of each articulated link (16') is joined by the said opposite end part (17'b) to the said control lever (22'') by the third articulation (21') and, between its end parts (17'a, 17'b), to the rotating plate (8'') by the first articulation (19').

4. Pitch-control device according to Claim 1, chracterized in that each articulated link (16) comprises two arms (17, 18) articulated together by a fourth articulation (21) separate from the first articulation (19) and second articulation (20), and a first arm (17) of which is joined to the rotating plate (8, 8') by the first articulation (19) and the second arm (18) of which is joined to the corresponding pitch rod (6) by the second articulation (20), the corresponding control lever (22,22') being joined to at least one of the two arms (17,18) by the third articulation (21), while a second lever (28) is additionally articulated by a fifth articulation (20) to the articulated link (16) and/or the corresponding pitch rod (6) and additionally (29) to the rotating plate (8,8').

5. Pitch-control device according to Claim 4, characterized in that for each articulated link (16), the third and fourth articulations are coincident (21).

6. Pitch-control device according to any one of Claims 4 and 5, characterized in that for each articulated link (16), the second and fifth articulations are coincident (20).

7. Pitch-control device according to any one of Claims 4 to 6, characterized in that the rotating plate (8) is mounted axially between the non-rotating plate (11) and the auxiliary plate (24) and exhibits, for each articulated link (16), a support (30) on which one end of the second corresponding lever (28) is articulated (29) and through which the corresponding control lever (22) passes (31).

8. Pitch-control device according to any one of Claims 4 to 6, characterized in that the auxiliary plate (24') is mounted axially between the non-rotating plate (11') and the rotating plate (8'), and the latter exhibits, for each articulated link (16), a passage (31') through which the corresponding control lever (22') passes and a support (30) to which one end of the second corresponding lever (28) is articulated (29).

9. Pitch-control device according to any one of Claims 1 to 8, characterized in that the auxiliary plate (24,24', 24'') is mounted so that it can rotate on the non-rotating plate (11,11',11'') with the aid of at least one rolling elements bearing (25,25',25'') which is off-centred with respect to the axis of the non-rotating plate (11,11',11'').

10. Pitch-control device according to any one of Claims 1 to 9, characterized in that the auxiliary plate (24,24'') is driven in rotation by the rotating plate (8,8'') by means of at least one rotating scissors (26,26'') fitting articulated, on the one hand, to the rotating plate (8,8'') and, on the other hand, to the auxiliary plate (24,24'').

11. Pitch-control device according to any one of Claims 1 to 9, characterized in that the auxiliary plate (24',24'') is driven in rotation by the rotating plate (8',8'') by means of at least one control lever (22',22'') and of at least one arm (17,17') of at least one corresponding articulated link (16,16').

12. Pitch-control device according to any one of Claims 1 to 11, characterized in that the eccentricity of the auxiliary plate (24) as defined with respect to the non-rotating plate (11) is fixed and predetermined by the structure of the said plates and by the way in which the auxiliary plate (24) is mounted on the non-rotating plate (11).

13. Pitch-control device according to any one of Claims 1 to 11, characterized in that the eccentricity of the auxiliary plate (24',24'') as defined with respect to the non-rotating plate (11',11'') is variable and determined by an off-centring system supported by the non-rotating plate (11',11'').

14. Pitch-control device according to Claim 13, characterized in that the off-centring system comprises, on the one hand, an intermediate plate (32,32') held axially with respect to the non-rotating plate (11',11'') but mounted so that it can slide in a radial plane with respect to the non-rotating plate (11',11''), and on which the auxiliary plate (24' ,24'') is mounted so that it can rotate with the aid of at least one rolling elements bearing (25',25'') and, on the other hand, at least two actuators (34,34',35,35') supported by the non-rotating (11',11'') plate and each controlling the movements of the intermediate plate (32,32') with respect to the non-rotating plate (11,11') in respectively one of two different directions, in order to give the defined eccentricity to a moving assembly comprising the auxiliary plate (24',24''), the intermediate plate (32,32') and the rolling elements bearing or bearings (25',25'') interposed between them.

15. Pitch-control device according to Claim 14, characterized in that each of the two actuators (34,34',35,35') is articulated via one end to the non-rotating plate (11', 11''), and via the other end close to one end of respectively one of two rods (45,45',46,46') each articulated at its central part at a fixed point (47,47';48,48') to the non-rotating plate (11',11''), the other end of one of the rods (45,45') being articulated at a fixed point (51,51') to the intermediate plate (32,32') so as to halt the latter in terms of rotation, while the other end of the other rod (46,46') is articulated to a connecting rod (54,54') also articulated at a fixed point (55,55') to the intermediate plate (32,32').

16. Pitch-control device according to Claim 14, characterized in that each of the two actuators (34',35') is articulated via one end to the non-rotating plate (11''), and via the other end close to one end of respectively one of two rods (45',46') each articulated in its central part at a fixed point (47',48') to the non-rotating plate (11''), and via its other end to a respective connecting rod (68,54') also articulated at a respective fixed point (69,55') to the intermediate plate (32'), the rotation of which is halted by at least one non-rotating scissors fitting (71) articulated, on the one hand, to the intermediate plate (32') and, on the other hand, to the non-rotating plate (11'').

17. Pitch-control device according to any one of Claims 15 and 16, characterized in that the two actuators (34,35, 34',35') are identical and the two rods (45,46,45',46') are identical and each move the intermediate plate (32,32') in respectively one of two substantially mutually orthogonal directions.

18. Pitch-control device according to any one of Claims 14 to 17, characterized in that the actuators (34,35) are controlled by at least one computer (36) receiving at least signals (37) regarding the positions of the flight controls and/or at least signals (38) regarding values of flight parameters.

19. Pitch-control device according to any one of Claims 14 to 18, characterized in that the actuators (34,35,34', 35') are chosen from the types comprising electric rams and servo controls.

20. Pitch-control device according to any one of Claims 14 to 19, characterized in that the intermediate plate (32') is held axially on the non-rotating plate (11'') with the aid of at least one bolt (58) passing through a tubular spacer piece (61) located in a slot (60) made in the intermediate plate (32') so as to exhibit a clearance allowing the intermediate plate (32') to slide with respect to the non-rotating plate (11'') in a radial plane with respect to the axis of the latter plate, under the control of the actuators (34',35') of the off-centring system.

## Patentansprüche

1. Vorrichtung zur Steuerung der Anstellung der Blätter eines Drehflüglerrotors, insbesondere eines Hubschrauberhauptrotors, bei dem jedes Blatt (4) zum einen um eine Rotationsachse (A-A) von einem Rotorschaft (2, 2') mit Hilfe einer Nabe (3) und zum anderen rotationsvereint um eine Längsachse (X-X) zur Anstelländerung von einem Anstellhebel (5) drehangetrieben wird, der von einer Anstellstange (6) gesteuert wird, die mit einer Platte (8, 8', 8'') verbunden ist, die sich mit dem Rotorschaft (2, 2') mitdreht und zu einem Mechanismus (7) mit kreisförmigen Platten gehört, bei welchem die Drehplatte (8, 8', 8'') an einer nicht drehbaren Platte (11, 11', 11'') drehbar angebracht ist, die sich bei Betätigung von Flugsteuerbetätigungsgliedern (15, 15') axial (13, 13') entlang dem Rotorschaft (2, 2') verschieben und in jeder Richtung in bezug auf den Rotorschaft (2, 2') neigen (12, 12') läßt, **dadurch gekennzeichnet**, daß sie umfaßt:
- eine mit der Drehplatte (8, 8', 8'') drehungsvereinte und drehbar mit einer definierten Exzentrierung an der nicht drehbaren Platte (11, 11', 11'') angebrachte Zusatzplatte (24, 24', 24''), und
- für jedes Blatt (4) eine gelenkige Verbindung (16, 16'), die wenigstens einen Arm (17, 17') enthält, durch den sie mit der Drehplatte (8, 8', 8'') durch ein erstes Gelenk (19, 19') verbunden ist, und die in Reihe mit einer entsprechenden Anstellstange (6) angebracht ist, wobei sie mit dieser Anstellstange (6) durch ein zweites Gelenk (20, 20') verbunden ist, das vom ersten Gelenk (19, 19') sowie von einem dritten Gelenk (21, 21') verschieden ist, durch das die gelenkige Verbindung (16, 16') mit einem Steuerhebel (22, 22', 22 '') verbunden ist, der außerdem an der drehbaren und exzentrierten Zusatzplatte (24, 24', 24'') angelenkt ist, so daß die Drehung der letzteren durch jeden Steuerhebel (22, 22', 22'') zu Winkelbewegungen jedes Armes (17, 18, 17', 18') der entsprechenden gelenkigen Verbindung (16, 16') führt, welche die Anstellstange (6) verschiebt, um die Anstellung des entsprechenden Blattes (4) zu steuern.

2. Anstellsteuervorrichtung nach Anspruch 1, **dadurch gekennzeichnet**, daß jede gelenkige Verbindung (16') einen einzigen Arm (17') aufweist, der an einem Endteil (17'a) mit einem Ende der entsprechenden Anstellstange (6) über das zweite Gelenk (20') und an seinem entgegengesetzt liegenden Endteil (17'b) über jeweils eines der beiden Gelenke, nämlich über das erste (19') oder das dritte (21') Gelenk der gelenkigen Verbindung (16'), mit der Drehplatte (8'') bzw. mit einem Endteil des entsprechenden Steuerhebels (22'') verbunden ist, der an seinem entgegengesetzten Endteil an der Zusatzplatte (24'') gelenkig (23'') angebracht ist, wogegen der Arm (17') zwischen seinen Endteilen über das erste (19') bzw. dritte (21'), jeweils andere Gelenk der gelenkigen Verbindung (16') angelenkt ist.

3. Anstellsteuervorrichtung nach Anspruch 2, **dadurch gekennzeichnet**, daß die Zusatzplatte (24'') axial zwischen der Drehplatte (8'') und der nicht drehbaren Platte (11'') angebracht ist, und der einzige Arm (17') jeder gelenkigen Verbindung (16') durch den entgegengesetzt liegenden Endteil (17'b) mit dem Steuerhebel (22'') durch das dritte Gelenk (21') und zwischen seinen Endteilen (17'a, 17'b) mit der Drehplatte (8'') durch das erste Gelenk (19') verbunden ist.

4. Anstellsteuervorrichtung nach Anspruch 1, **dadurch gekennzeichnet**, daß jede gelenkige Verbindung (16) zwei Arme (17, 18) aufweist, die durch ein viertes, vom ersten (19) und zweiten (20) Gelenk verschiedenes Gelenk (21) miteinander gelenkig verbunden sind und von denen ein erster Arm (17) mit der Drehplatte (8, 8') durch das erste Gelenk (19) und der zweite Arm (18) mit der entsprechenden Anstellstange (6) durch das zweite Gelenk (20) verbunden ist, wobei der entsprechende Steuerhebel (22, 22') mit wenigstens einem der beiden Arme (17, 18) durch das dritte Gelenk (21) verbunden ist, wogegen ein zweiter Hebel (28) darüber hinaus durch ein fünftes Gelenk (20) mit der gelenkigen Verbindung (16) und/oder der Anstellstange (6) und überdies (29) mit der Drehplatte (8, 8') gelenkig verbunden ist.

5. Anstellsteuervorrichtung nach Anspruch 4, **dadurch gekennzeichnet**, daß für jede gelenkige Verbindung (16) das dritte und das vierte Gelenk verschmolzen (21) sind.

6. Anstellsteuervorrichtung nach einem der Ansprüche 4 und 5, **dadurch gekennzeichnet**, daß für jede gelenkige Verbindung (16) das zweite und das fünfte Gelenk verschmolzen (20) sind.

7. Anstellsteuervorrichtung nach einem der Ansprüche 4 bis 6, **dadurch gekennzeichnet**, daß die Drehplatte (8) axial zwischen der nicht drehbaren Platte (11) und der Zusatzplatte (24) angebracht ist und für jede gelenkige Verbindung (16) eine Stütze (30) aufweist, auf der ein Ende des entsprechenden zweiten Hebels (28) gelenkig (29) angebracht ist und die vom entsprechenden Steuerhebel (22) durchlaufen (31) wird.

8. Anstellsteuervorrichtung nach einem der Ansprüche 4 bis 6, **dadurch gekennzeichnet**, daß die Zusatzplatte (24') axial zwischen der nicht drehbaren Platte (11') und der Drehplatte (8') angebracht ist und diese letztere für jede gelenkige Verbindung (16) einen vom entsprechenden Steuerhebel (22') durchlaufenen Durchlaß (31') und eine Stütze (30) aufweist, an der ein Ende des zweiten entsprechenden Hebels (28) gelenkig (29) angebracht ist.

9. Anstellsteuervorrichtung nach einem der Ansprüche 1 bis 8, **dadurch gekennzeichnet**, daß die Zusatzplatte (24, 24', 24'') drehbar an der nicht drehbaren Platte (11, 11', 11'') mit Hilfe wenigstens eines in bezug auf die Achse der nicht drehbaren Platte (11, 11', 11'') exzentrisch angeordneten Wälzlagers (25, 25', 25'') angebracht ist.

10. Anstellsteuervorrichtung nach einem der Ansprüche 1 bis 9, **dadurch gekennzeichnet**, daß die Zusatzplatte (24, 24'') durch die Drehplatte (8, 8'') mit Hilfe wenigstens eines Drehzirkels (26, 26'') drehangetrieben ist, der einerseits an der Drehplatte (8, 8'') und andererseits an der Zusatzplatte (24, 24'') gelenkig angebracht ist.

11. Anstellsteuervorrichtung nach einem der Ansprüche 1 bis 9, **dadurch gekennzeichnet**, daß die Zusatzplatte (24', 24'') durch die Drehplatte (8', 8'') mit Hilfe wenigstens eines Steuerhebels (22', 22'') und wenigstens eines Armes (17, 17') wenigstens einer entsprechenden gelenkigen Verbindung (16, 16') drehangetrieben ist.

12. Anstellsteuervorrichtung nach einem der Ansprüche 1 bis 11, **dadurch gekennzeichnet**, daß die definierte Exzentrierung der Zusatzplatte (24) in bezug auf die nicht drehbare Platte (11) fest ist und durch den Aufbau der genannten Platten und die Anbringung der Zusatzplatte (24) an der nicht drehbaren Platte (11) festgelegt ist.

13. Anstellsteuervorrichtung nach einem der Ansprüche 1 bis 11, **dadurch gekennzeichnet**, daß die definierte Exzentrierung der Zusatzplatte (24', 24'') in bezug auf die nicht drehbare Platte (11', 11'') variabel ist und durch ein durch die nicht drehbare Platte (11', 11'') getragenes Exzentrierungssystem bestimmt ist.

14. Anstellsteuervorrichtung nach Anspruch 13, **dadurch gekennzeichnet**, daß das Exzentrierungssystem einerseits eine Zwischenplatte (32, 32'), die axial in bezug auf die nicht drehbare Platte (11', 11'') gehalten wird, jedoch in einer in bezug auf die nicht drehbare Platte (11', 11'') radialen Ebene verschieblich angebracht ist und an der die Zusatzplatte (24', 24'') mit Hilfe wenigstens eines Wälzlagers (25', 25'') drehbar angebracht ist, und andererseits wenigstens zwei Betätigungsglieder (34, 34', 35, 35') aufweist, die durch die nicht drehbare Platte (11', 11'') getragen werden und jeweils die Verschiebungen der Zwischenplatte (32, 32') in bezug auf die nicht drehbare Platte (11', 11'') in jeweils einer von zwei unterschiedlichen Richtungen steuern, um einem beweglichen Organ, das die Zusatzplatte (24', 24''), die Zwischenplatte (32, 32') und das oder die dazwischen angeordneten Wälzlager (25', 25'') enthält, die definierte Exzentrierung zu geben.

15. Anstellsteuervorrichtung nach Anspruch 14, **dadurch gekennzeichnet**, daß jedes der beiden Betätigungsglieder (34, 34', 35, 35') durch ein Ende an der nicht drehbaren Platte (11', 11'') und durch das andere Ende in der Nähe eines Endes jeweils einer von zwei Stangen (45, 45', 46, 46') gelenkig angebracht ist, die jeweils in ihrem mittleren Teil in einem festen Punkt (47, 47'; 48, 48') an der nicht drehbaren Platte (11', 11'') befestigt sind, wobei das andere Ende der einen dieser Stangen (45, 45') in einem festen Punkt (51, 51') an der Zwischenplatte (32, 32') gelenkig angebracht ist, um den Drehungsstillstand dieser letzteren zu gewährleisten, wogegen das andere Ende der anderen Stange (46, 46') mit einem Zwischenglied (54, 54') gelenkig verbunden ist, das darüber hinaus in einem festen Punkt (55, 55') an der Zwischenplatte (32, 32') angelenkt ist.

16. Anstellsteuervorrichtung nach Anspruch 14, **dadurch gekennzeichnet**, daß jedes der beiden Betätigungsglieder (34', 35') mit einem Ende an der nicht drehbaren Platte (11'') und mit dem anderen Ende in der Nähe eines Endes jeweils einer von zwei Stangen (45', 46') gelenkig angebracht ist, die jeweils in ihrem mittleren Teil in einem festen Punkt (47', 48') an der nicht drehbaren Platte (11'') gelenkig angebracht sind und mit dem anderen Ende an einem jeweiligen Zwischenglied (68, 54') gelenkig angebracht ist, das darüber hinaus jeweils in einem festen Punkt (69, 55') an der Zwischenplatte (32') gelenkig angebracht ist, deren Drehungsstillstand durch wenigstens einen nicht drehbaren Zirkel (71) gewährleistet ist, der einerseits an der Zwischenplatte (32') und andererseits an der nicht drehbaren Platte (11'') gelenkig angebracht ist.

17. Anstellsteuervorrichtung nach einem der Ansprüche 15 und 16, **dadurch gekennzeichnet**, daß die beiden Betätigungsglieder (34, 35, 34', 35') identisch sind und die beiden Stangen (45, 46, 45', 46') identisch sind und jeweils die Zwischenplatte (32, 32') in jeweils einer von zwei zueinander im wesentlichen senkrechten Richtungen verschieben.

18. Anstellsteuervorrichtung nach einem der Ansprüche 14 bis 17 , **dadurch gekennzeichnet**, daß die Betätigungsglieder (34, 35) durch wenigstens einen Rechner (36) gesteuert werden, der zumindest Signale (37), die Positionen der Flugsteuerungen ausdrücken, und/oder zumindest Signale (38), die Werte von Parametern des Fluges ausdrücken, aufnimmt.

19. Anstellsteuervorrichtung nach einem der Ansprüche 14 bis 18 , **dadurch gekennzeichnet**, daß die Betätigungsglieder (34, 35, 34', 35') aus denjenigen Typen gewählt sind, welche die elektrischen Stellglieder und die Servosteuerungen enthalten.

20. Anstellsteuervorrichtung nach einem der Ansprüche 14 bis 19 , **dadurch gekennzeichnet**, daß die Zwischenplatte (32') axial an der nicht drehbaren Platte (11'') mit Hilfe wenigstens eines Bolzens (58) gehalten ist, der ein rohrförmiges Abstandsstück (61) durchläuft, das in einem Langloch (60) angeordnet ist, das in der Zwischenplatte (32') vorgesehen ist, um ein Spiel zu erzielen, das die Verschiebungen der Zwischenplatte (32') in bezug auf die nicht drehbare Platte (11'') in einer in bezug auf die Achse der letzteren radialen Ebene bei der Steuerung der Betätigungsglieder (34', 35') des Exzentrierungssystems ermöglicht.
